# EUROPEAN PATENT SPECIFICATION

(11) **EP 3 866 429 B1**
(45) Date of publication and mention of the grant of the patent: **24.05.2023**
(21) Application number: 20157336.7
(22) Date of filing: 14.02.2020
(51) Int. Cl.: H04W 88/16

(54) **MULTIPATH CAPABLE NETWORK DEVICE AND COMMUNICATION SYSTEMS FOR CENTRALLY MONITORING AND CONTROLLING DATA TRAFFIC TO AND/OR FROM A MULTIPATH CAPABLE CUSTOMER EQUIPMENT**
MEHRWEGFÄHIGE NETZVORRICHTUNG UND KOMMUNIKATIONSSYSTEME ZUR ZENTRALEN ÜBERWACHUNG UND STEUERUNG DES DATENVERKEHRS ZU UND/ODER VON EINER MEHRWEGFÄHIGEN KUNDENAUSRÜSTUNG
DISPOSITIF DE RÉSEAU ET SYSTÈMES DE COMMUNICATION CAPABLES DE TRAJETS MULTIPLES POUR SURVEILLER ET COMMANDER DE MANIÈRE CENTRALISÉE LE TRAFIC DE DONNÉES VERS ET/OU DEPUIS UN ÉQUIPEMENT CLIENT CAPABLE DE TRAJETS MULTIPLES

(43) Date of publication of application: 18.08.2021
(73) Proprietor: Deutsche Telekom AG, 53113 Bonn (DE)
(72) Inventor: AMEND, Markus, 63667 Nidda (DE); BOGENFELD, Eckard,, 67316 Carlsberg (DE)
(74) Representative: Blumbach · Zinngrebe Patentanwälte PartG mbB

(56) References cited:
- US-A1- 2020 007 449
- "3rd Generation Partnership Project; Technical Specification Group Services and System Aspects; System architecture for the 5G System (5GS); Stage 2 (Release 16)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. V16.3.0 22 December 2019 (2019-12-22), pages 1-417, XP051840930, Retrieved from the Internet: URL:ftp://ftp.3gpp.org/Specs/archive/23_se ries/23.501/23501-g30.zip 23501-g30.docx [retrieved on 2019-12-22]

## Description

### Technical Field

The present invention generally relates to a multipath capable network device and communication systems for centrally monitoring and controlling data traffic to and/or from a multipath capable customer equipment, and in particular to protecting at least one multipath capable customer equipment which is configured to transmit and receive data traffic via a multipath transmission link.

### Background

The Internet has developed into a ubiquitous communication system accessible through multiple access technologies, which, inter alia, provides a huge amount of data to end users. As a result, great efforts are undertaken with respect to multi-connectivity or multipath solutions for aggregation and improved traffic balancing by using different access technologies.

Different approaches are pursued to provide customers multiple types of access technologies to get access to the Internet. One approach is the combination of a fixed access network like DSL and a mobile access network like LTE, which connect at least one hybrid customer premises equipment (HOPE) to a single termination point of an Internet Service Provider (ISP), called hybrid access gateway (HAG) to converge user based functionalities. This approach is described in the Broadband Forum (BBF) technical report, "Hybrid Access Broadband Network Architecture", TR-348, July 2016.

An alternative approach is described for example in the 3^{rd} Generation Partnership Project (3GPP) technical report, "System Architecture for the 5G System (Release 15)", TR 23.793 February 2017. This system architecture supports mobile devices having two different wireless access interfaces in getting multiple access via a 3GPP access network like LTE or 5G and an untrusted non-3GPP access network like DSL to the internet by using a single multi-connectivity termination point with a user plane functionality (UPF).

In order to increase in particular data traffic throughput between a customer equipment and the Internet multipath network protocols are developed which logically bundle multiple single paths to a multipath transmission link or a multipath connection. For example, the Internet Engineering Task Force (IEFT) has designed the Multipath TCP (MPTCP) as a multipath network protocol, which is described inter alia in RFC 6824. In short, a user device, for example a mobile phone, which exploits MPTCP, is able to establish a TCP channel, called subflow, over each single path to be used in a multipath transmission link to a termination point of an ISP. Other multipath network protocols are, for example, MP-QUIC (https://datatracker.ieft.org/doc/draft-deconinck-quic-multipath/) and MP-DCCP ((https://datatracker.ieft.org/doc/draft-amend-tsvwg-multipath-dccp/)

Document D1, "US 2020/007449 A1 (MORIN STEVE [CA] ET AL) 2 January 2020 (2020-01-02)", follows the teachings of the BroadBand Forum. It discloses HCPE and HAG (Hybrid Access CPE and Gateway). The HCPE and HAG control the MPTCP per flow. In D1, there are scheduling and blocking policies. These policies are related to applications, also to subscribers. To implement these policies control is done per MPTCP sub-flow. Each TCP subflow may be provided over a separate access network or may share an access network. D1 also discloses use of the mptcp-scheduler-policy="max-cost-forbid" such that there is only a single subflow (on the primary path).

### Summary of the invention

It is an object of the present invention to provide a multipath capable network device and communication systems for centrally monitoring and controlling data traffic to and/or from a multipath capable customer equipment, wherein data traffic belonging to a single communication session is transmitted over a multipath transmission link.

The technical problem mentioned above is solved by the features of independent claims 1 and 6.

An illustrative aspect of the invention can be seen in that that hybrid access networks for example on the basis of Fixed-Mobile Convergence (FMC) or 3GPP ATSSS exploits a core network having a single termination point that controls every possible connectivity and/or access towards the Internet. This network architecture can be exploited to implement a protection software component in a multipath capable network device, which can be considered as a single termination point of an Internet Service Provider. In particular the multipath capable network device is configured to centrally manage and execute the protection software component to protect at least one multipath capable customer equipment and services without storing any application on the at least one multipath capable customer equipment which is configured to transmit and receive data traffic via a multipath transmission link or multipath connection. In particular the protection software component is adapted to monitor and control each single path of a multipath transmission link in order to keep track of path specific information belonging to portions of data transmitted or received by the multipath capable network device. With other words: The protection software component can preferably perform a firewall functionality with respect to each single path of a multipath connection. Independent of any mentioned use cases like 5G ATSSS and hybrid access networks, the present invention can be realized in any network architecture, which preferably provide access over multiple access technologies and exploits a converged userplane implemented in a multipath capable network device of an ISP.

A protection software configuration, e.g. different protection rules, can be applied from the network operator of the multipath capable network device. Another option may provide an interface (API) for external configuration by a client device or a customer webinterface.

In the claims and the description the expressions "multipath capable network device" and "multipath capable customer equipment" mean in particular the capability that the multipath customer equipment and the multipath capable network device are each configured to establish and/or communicate via single paths multiplexed to a multipath transmission link, also called a multipath connection, of a single communication session. The single paths logically forming a multipath transmission link can be, for example, established over different access networks or over a common access network.

### Brief description of the drawings

Preferred embodiments of the invention are described in detail with respect to the accompanied figures, wherein:
- Fig. 1: shows an exemplary communication system according to the invention comprising a single access network, which provides a multipath access,
- Fig. 2: shows an alternative exemplary communication system according to the invention, which exploits a hybrid access network architecture,
- Fig. 3: shows an alternative exemplary communication system according to the invention, which exploits different access technologies based on 3GPP ATSSS.

### Detailed description of embodiments

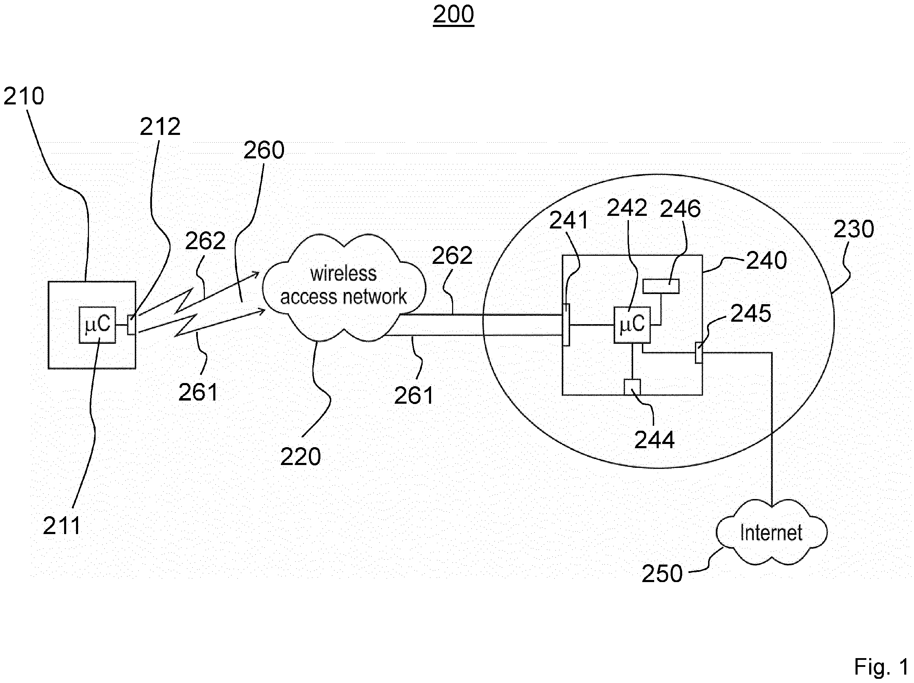

In Fig. 1 an illustrative communication system 200 is depicted which exploits at least one access network 220. In the present case a single wireless access network 220 is implemented, which might be a 3GPP based wireless access network.

The exemplary communication system 200 is capable of centrally monitoring and controlling data traffic between a multipath capable network device 240 and at least one multipath capable customer equipment 210 by using the multipath capable network device 240, which can be implemented in an ISP network 230. It should be noted, that the multipath capable network device 240 is thus adapted to protect the at least one multipath capable customer equipment 210 and or services provided by a data network 250 without requiring any protection software on the at least one multipath capable customer equipment 210. Preferably, the data network 250 is the Internet, which can be connected via a network interface 245 to the network device 240. Only for the sake of simplicity, only one customer equipment 210 is illustrated. In the present case, the multipath capable customer equipment 210 is a mobile phone.

The multipath capable mobile phone 210 comprises at least one wireless access interfaces, preferable a 3GPP based wireless access interface 212. In addition, the mobile device 210 comprises a control unit 211, e.g. a microcontroller, which is adapted to perform a bundling software stored in mobile device 210 to steer single path or multipath data transmission. For example, the Multipath TCP (MPTCP) network communication protocol can be deployed as the bundling software. In particular, the multipath capable mobile phone 210 is adapted to establish a multipath transmission link 260 including for example two bundled single paths 261 and 262 via the wireless access network 220 to the multipath capable network device 240 in order to get access to the Internet 250. Therefore, network device 240 comprises at least a multipath capable network interface 241, which terminates the wireless access network 220. In addition, the network device 240 comprises a control unit 242, e.g. a microcontroller, which is adapted to perform a bundling software to steer data transmission from the data network 250 to the mobile phone 210 by using for example the bundled paths 261, 262 of the multipath connection 260.

Furthermore, the multipath capable network device 240 and in particular the microcontroller 242 is configured to centrally monitor and control data traffic of a single session transmitted through each bundled path 261 and 262 of the establish multipath transmission link 260 from and/or to the at least one multipath capable customer equipment 210 in response to at least one protection rule.

This can be achieved by storing a protection software in a memory 246 of the network device 240. The network device 240 and preferably the microcontroller 242 is configured to perform the stored protection software to monitor and control the data traffic of the single session transmitted through each single path 261 and 261 of the established multipath transmission link 260 form and/or to the mobile phone 210. The bundling software may also be stored in the memory 246.

The at least one protection rule can be based on information about an identification of a multipath network protocol, e.g. the MPTCP, MP-QUIC or MP-DCCP protocol, used by the at least one multipath capable equipment 210 and/or the at least one access network type and/or the source IP address of the at least one multipath capable customer equipment 210 and/or a destination IP address, e.g. destination IP address of the network device 240 and/or a source port of the at least one multipath capable customer equipment 210 and/or a destination port and/or service based information and/or content based information, wherein the multipath capable network device 240 is configured to allow or deny in response to the at least one protection rule transmission of data traffic with respect to each single multipath 261 and 262 of the multipath transmission link 260 established between the multipath capable network device 240 and the at least one multipath capable customer equipment 210. A further protection rule can be based on multipath protocol specific information, e.g. protocol specific sequencing or latency information, or location specific information from a wireless access network and/or a non-wireless access network or cryptographic information identifying streams of a multipath session.

It should be noted, that according to the MPTCP protocol each data packet transmitted by the mobile phone 210 may include in its header inter alia the source IP of the mobile phone 210, a destination IP address of the network device 240, a sequence number, a session identification indicating which session the data packets belong to, a multipath network protocol identification, indicating that the source device, e.g. the mobile phone 210 is capable of transmitting and receiving data packet over a multipath transmission link, e.g. the multipath transmission link 260. For example, when performing the protection software component using the above mentioned protection rules the network device 240 is adapted to monitor each data packet transmitted over the multiple paths 261 and 262 and check whether the data packets received at the network device 240 belong to the same session, keep a required sequence order and/or a required latency, include the same source and destination IP address, the same multipath network protocol identification. If discrepancies are detected, a failure or attack is presumed which causes the network device 240 to interrupt or block the data transmission from and/or to the mobile phone 210 over the multiple paths 261 and 262 of the multipath transmission link 260.

In order to detect malware or a cyber attack during data transmission over the multipath transmission link 260 predefined data patterns can be stored for example in the memory 246 of the multipath capable network device 240. In this case, the network device 240 is configured to perform the protection software component to monitor and control the data traffic, i.e. the respective data packets, transmitted over the multiple paths 261 and 262 of the multipath transmission link 260 to detect malware or a cyber attack in response to the predefined data patterns.

In addition, the protection software component may allow a content filtering with a deep packet inspection with respect to each data packet transmitted by and received at the network device 240 via the multipath transmission link 240. This means that the network device 240 is configured to perform the protection software component in order to check the content of each data packet transmitted over the multiple paths 261 and 262. If one of the data packets which belong to the same session include a content belonging to a black list stored in the network device 240 the network device can block or interrupt data transmission over the multiple transmission link 260 between the mobile phone 210 and the network device 240.

It should be noted, that the appropriate protection software can be applied from the network operator, e.g. by defining the respective protection rules. In addition or alternative the network device may comprise an interface 244 for external configuration of the protection settings by a client device or by the client itself, e.g. using a management via a customer web interface.

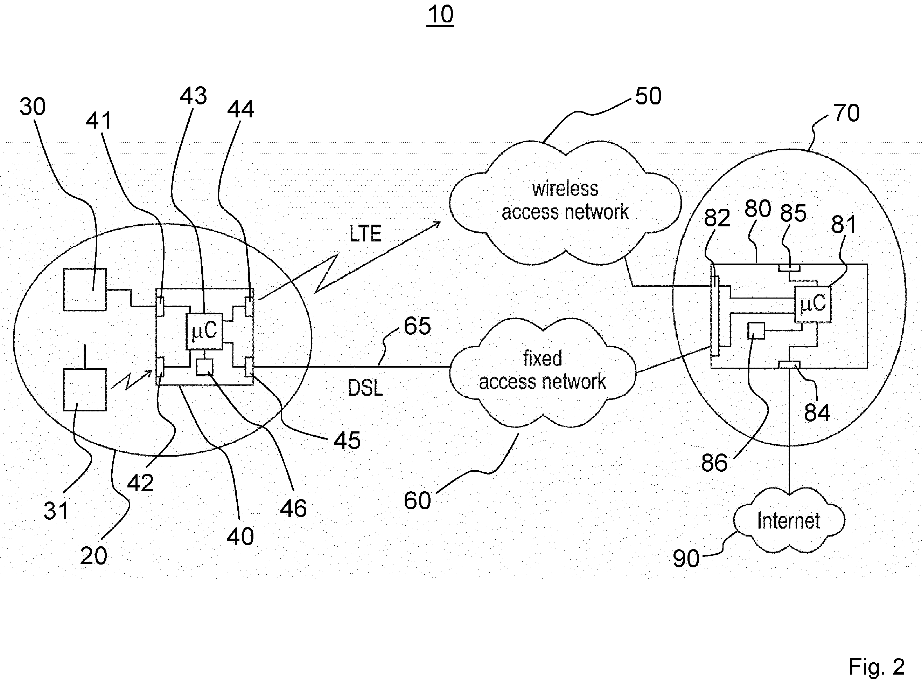

Fig. 2 depicts an exemplary communication system 10 based on a hybrid access architecture.

The exemplary communication system 10 is capable of centrally monitoring and controlling data traffic between a multipath capable network device 80 and at least one multipath capable customer equipment 20 by using the multipath capable network device 80, which can be implemented in an ISP network 70. It should be noted, that the multipath capable network device 80 is thus adapted to protect the at least one multipath capable customer equipment 20 and or services provided by a data network 90 without implementing any protection software on the at least one multipath capable customer equipment 20. Preferably, the data network 90 is the Internet, which can be connected via a network interface 84 to the network device 80. Only for the sake of simplicity, only one customer equipment 30 is illustrated.

The multipath capable customer equipment 20 comprises at least a first access interface 44 and a second access interface 45. Preferably, the first access network interface 44 is a 3GPP based wireless access network interface, e.g. a LTE or 5G based wireless access interface, whereas the second access interface 45 is, for example, a fixed access interface, in particular a DSL or fiber based access interface. As shown in Fig. 2, the multipath capable customer equipment 20 may comprise a multipath capable coupling device 40, which includes the first access interface 44 and the second access interface 45. Furthermore, the customer equipment 20 may comprise a fixed-line end user device 30 and/or a mobile end user device 31. The coupling device 40 can comprise a fixed-line interface 41 and/or a Wi-Fi based interface 42, wherein the fixed-line interface 41 is connected by wire to the fixed-line end user device 30 and the Wi-Fi based interface 42 is adapted to communicate via air with a Wi-Fi interface of the mobile end user device 31. The coupling device 40 can be realized as a router. In addition, the coupling device 40 comprises a control unit 43, e.g. a microcontroller, which is adapted to perform a bundling software stored in the coupling device 40 to steer data transmission by selecting one of the access interfaces 44 and 45 or by using both access interfaces 44 and 45 simultaneously in order to establish a multipath transmission link between the coupling device 40 and the network device 80. For example, the Multipath TCP (MPTCP) network communication protocol can be used as the bundling software. The bundling software and a firmware may be stored in a memory 46 of the coupling device 40.

In order to obtain multiple access to the data network 90 via the multipath capable network device 80, the coupling device 40 is adapted to be connected via a wireless access network 50, e.g. a LTE or 5G wireless access network, and a fixed access network 60 to the multi-connectivity capable network device 80. Therefore, the multipath capable network device 80 comprises at least one network interface 82, which terminates both the wireless access network 50 and the fixed access network 60. It should be noted that the multipath capable network device 80 may comprise for example two separate network interfaces, each terminating the wireless access network 50 and the fixed access network 60, respectively.

It should be noted that the operation of the communication system 10 is similar to that of the communication system 200 in that a multipath transmission link can be established between the coupling device 40 and the network device 80 by using only the wireless access network 50 or the fixed access network 60 or both. With other words: The multiple paths of a multipath transmission link are established via one of the access networks 50 or 60 or some of the multiple paths are established via the wireless access network 50 and the remaining paths of the multipath transmission link are established via the fixed access network 60. In the present case it is assumed that a multipath transmission link 65 has been established by the coupling device 40 via the fixed access network 60.

The multipath capable network device 80 and in particular its microcontroller 81 is configured to centrally monitor and control data traffic of a single session transmitted through each bundled path of the establish multipath transmission link 65 from and/or to the at least one multipath capable customer equipment 20 in response to at least one protection rule. This can be achieved by storing a protection software in a memory 86 of the network device 80. The network device 80 and preferably the microcontroller 81 is configured to perform the stored protection software to monitor and control the data traffic of the single session transmitted through each single path of the established multipath transmission link 65 from and/or to the coupling device 40 or the user device 30 and 31, respectively. A bundling software may also be stored in the memory 86.

The at least one protection rule can be based on information about an identification of a multipath network protocol, e.g. the MPTCP protocol, used by the at least one multipath capable equipment 20 and/or the at least one access network type and/or the source IP address of the at least one multipath capable customer equipment 20 and/or a destination IP address, e.g. destination IP address of the network device 80 and/or a source port of the at least one multipath capable customer equipment 20 and/or a destination port and/or service based information and/or content based information, wherein the multipath capable network device 80 is configured to allow or deny in response to the at least one protection rule transmission of data traffic with respect to each single multipath of the multipath transmission link 65 established between the multipath capable network device 80 and the at least one multipath capable customer equipment 20. A further protection rule can be based on multipath protocol specific information, e.g. protocol specific sequencing or latency information, or location specific information from a wireless access network and/or a non-wireless access network. Using such location specific information rules the multipath capable network device 80 may be configured to detect an attack on a multipath session, if, for example, a single path of the multipath session has a non-German origin, whereas the multipath session has been initiated from Germany.

It should be noted, that according to the MPTCP protocol each data packet transmitted for example by the user device 30 via the coupling device 40 may include in its header inter alia the source IP of the coupling device 40, a destination IP address of the network device 80, a sequence number, a session identification indicating which session the data packets belong to, a multipath network protocol identification, indicating that the source device, e.g. the coupling device 40 is capable of transmitting and receiving data packet over a multipath transmission link, e.g. the multipath transmission link 65. For example, when performing the protection software component using the above mentioned protection rules the network device 80 is adapted to monitor each data packet transmitted over the multiple paths of the multipath transmission link 65 and check whether the data packets received at the network device 80 belong to the same session, keep a required sequence order and/or a required latency, include the same source and destination IP address, the same multipath network protocol identification. If discrepancies are detected, a failure or attack is presumed which causes the network device 80 to interrupt or block the data transmission from and/or to the coupling device 40 over the multiple paths of the multipath transmission link 65.

In order to detect malware or a cyber attack during data transmission over the multipath transmission link 65 predefined data patterns can be stored for example in the memory 86 of the multipath capable network device 80. In this case, the network device 80 is configured to perform the protection software component to monitor and control the data traffic, i.e. the respective data packets, transmitted over the multiple paths of the multipath transmission link 65 to detect malware or a cyber attack in response to the predefined data patterns.

In addition, the protection software component may allow a content filtering with a deep packet inspection with respect to each data packet transmitted by and received at the network device 80 via the multipath transmission link 80. This means that the network device 80 is configured to perform the protection software component in order to check the content of each data packet transmitted over the multiple paths of the multipath transmission link 65. If one of the data packets which belongs to the same session include a content belonging to a black list stored in the network device 80 the network device can block or interrupt data transmission over the multiple transmission link 65 between the coupling device 40 and the network device 80.

It should be noted, that the appropriate protection software can be applied from the network operator, e.g. by defining the respective protection rules. In addition or alternative the network device 80 may comprise an interface 85 for external configuration of the protection settings by a client device or by the client itself, e.g. using a management via a customer web interface.

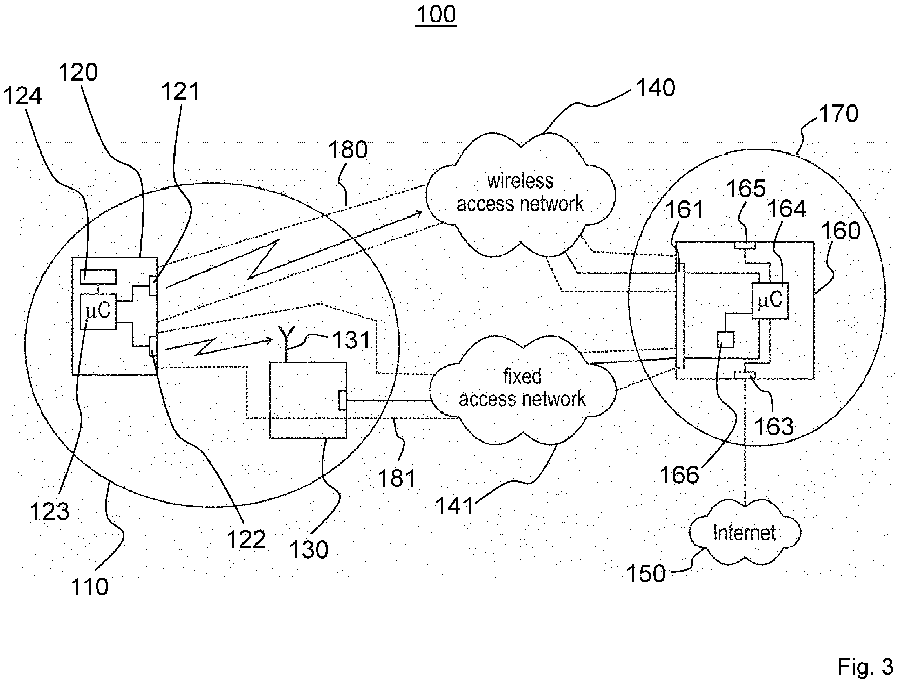

In Fig. 3 an alternative communication system 100 is depicted which exploits instead of a hybrid access network architecture as shown in Fig. 2 a fixed mobile convergence access network architecture according to 3GPP ATSSS, which may comprise an untrusted non-wireless access network 141 and a trusted wireless access network 140.

The exemplary communication system 200 is capable of centrally monitoring and controlling data traffic between a multipath capable network device 160 and at least one multipath capable customer equipment 110 by using the multipath capable network device 160, which can be implemented in an ISP network 170. It should be noted, that the multipath capable network device 160 is thus adapted to protect the at least one multipath capable customer equipment and or services provided by a data network 150 without implementing any protection software on the at least one multipath capable customer equipment 110. Preferably, the data network 150 is the Internet, which can be connected via a network interface 163 to the network device 160. For the sake of better understanding, only one customer equipment 110 is illustrated. It should be noted, that the network device 160 can be substantially identical in construction and function to the network device 80 or 240.

The multipath capable customer equipment 110 comprises a mobile device 120, e.g. a mobile phone, and a coupling device 130, which may be a router. The mobile device 120 comprises preferably two different wireless access interfaces, namely a 3GPP based wireless access interface 121 and a Wi-Fi based wireless access interface 122. Preferably, wireless access network interface 121 is a LTE or 5G based wireless access interface.

As shown in Fig. 3, the coupling device 130 comprises a Wi-Fi based interface 131, which is adapted to communicate via air with the Wi-Fi access interface 122 of the mobile end user device 120. In addition, the mobile device 120 comprises a control unit 123, e.g. a microcontroller, which is adapted to perform a bundling software stored in the mobile device 120 to steer data transmission by selecting one of the wireless access interfaces 121 and 122 or by using both access interfaces 121 and 122 simultaneously. For example, the Multipath TCP (MPTCP) network communication protocol can be used as the bundling software. The bundling software and e.g. a firmware can be stored in a storage 124 of the mobile device 120.

In order to obtain access to the data network 150 via the multipath capable network device 160, the mobile end user device 120 is adapted to be connected via a wireless access network 140, e.g. a LTE or 5G wireless access network, and/or via a fixed access network 141 to the multi-connectivity capable network device 160. Therefore, network device 160 comprises at least one network interface 161, which terminates the wireless access network 140 and the fixed access network 141. It should be further noted, that the mobile device 120 is configured to execute for example the multipath network protocol MPTCP in order to establish a multipath transmission link via the wireless access network 140 and/or the fixed access network 141.

It should be noted that the operation of the communication system 100 is similar to that of the communication system 200 or 10 in that a multipath transmission link can be established between the mobile end user device 120 and the network device 160 by using only the wireless access network 140 or the fixed access network 141 or both. With other words: The multiple paths of a multipath transmission link are established via one of the wireless access network 140 or the fixed access network 141 or some of the multiple paths are established via the wireless access network 140, whereas the remaining paths of the multipath transmission link are established via the fixed access network 141. In the present case it is assumed that a multipath transmission link 180 has been established by the mobile device 120 via the wireless access network 140, so that data packets, which preferably belong to a single Internet session, can be exchanged between the mobile end user device 120 and the network device 170. A further multipath transmission link 181 can be established alternatively or simultaneously by the mobile device 120 via the fixed access network 141 with respect to a further Internet session.

The multipath capable network device 160 and in particular its microcontroller 164 is configured to centrally monitor and control data traffic transmitted through each bundled path of the establish multipath transmission link 180 from and/or to the mobile device 120 in response to at least one protection rule. This can be achieved by storing a protection software in a memory 166 of the network device 160. The network device 160 and preferably the microcontroller 166 is configured to perform the stored protection software to monitor and control the data traffic, e.g. data packets of the single session, transmitted through each single path of the established multipath transmission link 140 from and/or to the coupling mobile device 120. A bundling software may also be stored in the memory 166.

The at least one protection rule can be based on information about an identification of a multipath network protocol, e.g. the MPTCP protocol, used by the at least one multipath capable equipment 110 and the mobile device, respectively, and/or the at least one access network type and/or the source IP address of the at least one multipath capable customer equipment 110 and/or a destination IP address, e.g. destination IP address of the network device 160 and/or a source port of the at least one mobile device 120 and/or a destination port and/or service based information and/or content based information, wherein the multipath capable network device 160 is configured to allow or deny in response to the at least one protection rule transmission of data traffic with respect to each single multipath of the multipath transmission link 180 established between the multipath capable network device 80 and the at least one multipath capable customer equipment 20. A further protection rule can be based on multipath protocol specific information, e.g. protocol specific sequencing or latency information.

It should be noted, that according to the MPTCP protocol each data packet transmitted for example by the mobile device 120 may include in its header inter alia the source IP of the coupling device 40, a destination IP address of the network device 80, a sequence number, a session identification indicating which session the data packets belong to, a multipath network protocol identification, indicating that the source device, e.g. the mobile device 120 is capable of transmitting and receiving data packet over a multipath transmission link, e.g. the multipath transmission link 180. For example, when performing the protection software component using the above mentioned protection rules the network device 160 is adapted to monitor each data packet transmitted over the multiple paths of the multipath transmission link 180 and check whether the data packets received at the network device 160
a) belong to the same session and/or keep a required sequence order and/or a required latency, and/or
b) include the same source and destination IP address, the same multipath network protocol identification. If any discrepancies are detected, a failure or attack is presumed which causes the network device 160 to interrupt or block the data transmission from and/or to the mobile device 120 over the multiple paths of the multipath transmission link 180.

In order to detect malware or a cyber attack during data transmission over the multipath transmission link 180 predefined data patterns can be stored for example in the memory 166 of the multipath capable network device 160. In this case, the network device 160 is configured to perform the protection software component to monitor and control the data traffic, i.e. the respective data packets, transmitted over the multiple paths of the multipath transmission link 180 to detect malware or a cyber attack in response to the predefined data patterns.

In addition, the protection software component may allow a content filtering with a deep packet inspection with respect to each data packet transmitted by and received at the network device 160 via the multipath transmission link 80. This means that the network device 160 is configured to perform the protection software component in order to check the content of each data packet transmitted over the multiple paths of the multipath transmission link 180. If one of the data packets which belongs to the same session include a content belonging to a black list stored in the network device 160 the network device can block or interrupt data transmission over the multiple transmission link 180 between the mobile device 120 and the network device 160.

It should be noted, that the appropriate protection software can be applied from the network operator, e.g. by defining the respective protection rules. In addition or alternative the network device 160 may comprise an interface 165 for external configuration of the protection settings by a client device or by the client itself, e.g. using a management via a customer web interface.

At least some of the exemplary aspects illustrated above are summarized now.

According to a preferred aspect, a multipath capable network device 80, 160, 240 (see Fig. 1, 2 and 3, respectively) is provided for centrally monitoring and controlling data traffic to and/or from a multipath capable customer equipment 20, 110, 210, wherein
the multipath capable network device is configured to be connected to a data network 90, 150 and 250, respectively, and, via a multipath transmission link 65, 180, 260 established over at least one access network, e.g. access network 60, 140 and 220, respectively, to at least one multipath capable customer equipment in order to enable the at least one multipath capable customer equipment 20, 110, 210 to get access to the data network 90, 150 and 250, respectively, and/or services provided by the data network, and wherein
the multipath capable network device 80, 160 and 240, respectively, is further configured to monitor and control data traffic transmitted through each single multipath of an established multipath transmission link from and/or to at least one multipath capable customer equipment 20, 110 and 210, respectively, in response to at least one protection rule.

According to a preferred embodiment the multipath capable network device is configured to perform a protection software component stored in the network device 80, 160 and 240, respectively, to monitor and control data traffic transmitted through each single multipath of an established multipath transmission link from and/or to at least one multipath capable customer equipment 20, 110 and 210, respectively. The protection software component is preferably adapted to conduct a kind of firewall with respect to each path of a established multipath transmission link.

Preferably, the at least one protection rule is based on information about an identification of a multipath network protocol used by the at least one multipath capable customer equipment and/or the at least one access network type and/or the source IP address of the at least one multipath capable customer equipment and/or a destination IP address and/or a source port of the at least one multipath capable customer equipment and/or a destination port and/or service based information and/or content based information, wherein the multipath capable network device 80, 160 and 240, respectively, is configured to allow or deny in response to the at least one protection rule transmission of data traffic with respect to each single multipath of the multipath transmission link established between the multipath capable network device 80, 160, 240 and the at least one multipath capable customer equipment 20, 110, 210.

Preferably, the multipath capable network device 80, 160 and 240, respectively, is configured to monitor and control data traffic transmitted through each single multipath of the multipath transmission link to detect malware or a cyber attack in response to predefined patterns stored in the multipath capable network device.

The multipath capable network device 80, 160 and 240 respectively may further comprise an interface 84, 163 and 244, respectively, for external configuration of the at least one protection rule and/or the predefined patterns.

According to a further exemplary aspect, a communication system 10, 100 and 200, respectively, is provided for centrally monitoring and controlling data traffic between a multipath capable network device 80, 160, 240 and at least one multipath capable customer equipment 20, 110, 210. The communication system 10, 100, 200 may comprise the following features:
- at least one access network 50, 60, 140, 141 and 220, respectively, and a data network 90, 150 and 250, respectively,
- a multipath capable network device 80, 160, 240 as described above, wherein the multipath capable network 80, 160, 240 device is connected to the at least one access network and the data network,
- at least one multipath capable customer equipment 20, 110, 210 being configured to establish a multipath transmission link 65, 180, 260 over the at least one access network to the multipath capable network device, wherein the multipath capable network device is configured to monitor and control data traffic transmitted through each single multipath of the multipath transmission link from and/or to the at least one multipath capable customer equipment in response to at least one protection rule.

Preferably, the at least one access network is a wireless access network 50, 140, 220 or a fixed access network 60, 141.

Preferably, the at least one customer equipment 20 comprises an end user device 30, 31 and a multipath capable coupling device 40 connected thereto, the multipath coupling device 40 being configured to be connected to the at least one access network 50 and/or 60 as shown in Fig, 2.

If, for example, the at least one access network 220 is a wireless access network,
the at least one customer equipment 210 may comprise a multipath capable mobile end user device configured to establish a multipath transmission link over the at least one access network 220 to the multipath capable network device 240, as depicted in Fig. 1.

Preferably, the multipath capable network device 80, 160, 240 is configured to identify the at least one multipath capable customer equipment 20, 110, 210 and to detect, whether the at least one multipath capable customer equipment is connected to the multipath capable network device via a multipath transmission link established over the at least one access network.

Preferably, the at least one multipath capable customer equipment 20, 110, 210 and the multipath capable network device 80, 160, 240 are configured each for executing a multipath network protocol, wherein the multipath network protocol may be, for example, the MPTCP, MP-QUIC or MP-DCCP protocol.

It should be noted, that each multipath capable customer equipment 20, 110, 210 and in particular the coupling device 40, the user device 120 and the user device 210 are configured to establish at least one multipath transmission link to the multipath capable network device 80, 160 and 240, respectively, to get access to the Internet.

## Claims

1. A multipath capable network device (80, 160, 240) for centrally monitoring and controlling data traffic to and/or from a multipath capable customer equipment (20, 110, 210), wherein
the multipath capable network device (80, 160, 240) is configured to be connected to a data network (90, 150, 250) and, via a multipath transmission link (65, 180, 181, 260) established over at least one access network (50, 60, 140, 141, 220), to at least one multipath capable customer equipment (20, 110, 210) in order to enable the at least one multipath capable customer equipment (20, 110, 210) to get access to the data network (90, 150, 250) and/or services provided by the data network, and wherein
the multipath capable network device (80, 160, 240) is further configured to perform a protection software component stored in the network device (80, 160, 240) to monitor and control data traffic transmitted through each single path of an established multipath transmission link (65, 180, 181, 260) from and/or to at least one multipath capable customer equipment (20, 110, 210) in response to at least one protection rule to detect malware or a cyber attack in response to predefined patterns stored in the multipath capable network device (20, 110, 210).

2. The multipath capable device of claim 1,
wherein the protection software component is configured to perform a firewall functionality with respect to each single path of the multipath transmission link (65, 180, 181, 260).

3. The multipath capable network device of claim 1,
wherein the at least one protection rule is based on information about an identification of a multipath network protocol used by the at least one multipath capable customer equipment (20, 110, 210) and/or the at least one access network type and/or the source IP address of the at least one multipath capable customer equipment (20, 110, 210) and/or a
destination IP address and/or a source port of the at least one multipath capable customer equipment (20, 110, 210) and/or a destination port and/or service based information and/or content based information, wherein the multipath capable network device (80, 160, 240) is configured to allow or deny in response to the at least one protection rule transmission of data traffic with respect to each single path of the multipath transmission link (65, 180, 181, 260) established between the multipath capable network device (80, 160, 240) and the at least one multipath capable customer equipment (20, 110, 210).

4. The multipath capable network device of any one of the preceding claims,
wherein the multipath capable network (80, 160, 240) is configured to perform the protection software component in order to check by using deep packet inspection the content of each data packet of the data traffic which belongs to a single session and to block or interrupt data transmission with respect to each single path of the multipath transmission link (65, 180, 181, 260) established between the multipath capable network device (80, 160, 240) and the at least one multipath capable customer equipment (20, 110, 210) if one of the data packets checked includes content belonging to a black list stored in the multipath capable network device (80, 160, 240).

5. The multipath capable network device of any one of the preceding claims, further comprising an interface for external configuration of the at least one protection rule and/or the predefined patterns.

6. A communication system (10, 100, 200) for centrally monitoring and controlling data traffic between a multipath capable network device (80, 160, 240) and at least one multipath capable customer equipment (20, 110, 210), the communication system comprising:
- at least one access network (50, 60, 140, 141, 220) and a data network (90, 150, 250),
- a multipath capable network device (80, 160, 240) according to any one of the claims 1 to 6, wherein the multipath capable network device (80, 160, 240) is connected to the at least one access network (50, 60, 140, 141, 220) and the data network (90, 150, 250),
- at least one multipath capable customer equipment (20, 110, 210) being configured to establish a multipath transmission link (65, 180, 181, 260) over the at least one access network (50, 60, 140, 141, 220) to the multipath capable network device (80, 160, 240), wherein
the multipath capable network device (80, 160, 240) is configured to perform a protection software component stored in the network device (80, 160, 240) to monitor and control data traffic transmitted through each single path of the multipath transmission link (65, 180, 181, 260) from and/or to the at least one multipath capable customer equipment (20, 110, 210) in response to at least one protection rule to detect malware or a cyber attack in response to predefined patterns stored in the multipath capable network device (20, 110, 210)..

7. The communication system of claim 6, wherein
the at least one access network (50, 60, 140, 141, 220) is a wireless access network or a fixed access network.

8. The communication system (10) claim 6 or 7, wherein the at least one customer equipment (20) comprises at least one end user device (30, 31) and a multipath capable coupling device (40) connected thereto, the multipath coupling device being configured to be connected to the at least one access network (50, 60) .

9. The communication system of claim 6 or 7,
wherein the at least one access network (220) is a wireless access network and wherein
the at least one customer equipment (210) comprises a multipath capable mobile end user device configured to establish a multipath transmission link (260) over the at least one access network (220) to the multipath capable network device (240).

10. The communication system of any one of the claims 6 to 9,
wherein the multipath capable network device (80, 160, 240) is configured to identify the at least one multipath capable customer equipment (20, 110, 210) and to detect, whether the at least one multipath capable customer equipment (20, 110, 210) is connected to the multipath capable network device (80, 160, 240) via a multipath transmission link (65, 180, 181, 260) established over the at least one access network (50, 60, 140, 141, 220).

11. The communication system of any one of the claims 6 to 10, wherein
the at least one multipath capable customer equipment (20, 110, 210) and the multipath capable network device (80, 160, 240) are configured each for executing a multipath network protocol.

12. The communication system of claim 11,
wherein the multipath network protocol is the MPTCP protocol.

## Patentansprüche

1. Mehrweg-fähige Netzwerkvorrichtung (80, 160, 240) zur zentralen Überwachung und Steuerung des Datenverkehrs zu und/oder von einer Mehrweg-fähigen Kundeneinrichtung (20, 110, 210), wobei
die Mehrweg-fähige Netzwerkvorrichtung (80, 160, 240) so konfiguriert ist, dass sie mit einem Datennetzwerk (90, 150, 250) und über eine MehrwegÜbertragungsverbindung (65, 180, 181, 260), die über mindestens ein Zugangsnetz (50, 60, 140, 141, 220) hergestellt wird, mit mindestens einem Mehrweg-fähigen Kundengerät (20, 110, 210) verbunden wird, um dem mindestens einen Mehrweg-fähigen Kundengerät (20, 110, 210) zu ermöglichen, Zugang zu dem Datennetz (90, 150, 250) und/oder den von dem Datennetz bereitgestellten Diensten zu erhalten, 250) und/oder von dem Datennetz bereitgestellten Diensten zu erhalten, und wobei
die mehrwegfähige Netzwerkeinrichtung (80, 160, 240) ferner so konfiguriert ist, dass sie eine in der Netzwerkeinrichtung (80, 160, 240) gespeicherte Schutzsoftwarekomponente ausführt, um Datenverkehr, der über jeden einzelnen Pfad einer eingerichteten Mehrwegübertragungsverbindung (65, 180, 181, 260) von und/oder zu mindestens einem Mehrweg-fähigen Kundengerät (20, 110, 210) übertragen wird, zu überwachen und zu steuern, und zwar unter Ansprechen auf mindestens eine Schutzregel, um Malware oder einen Cyberangriff als Reaktion auf vordefinierte Muster zu erkennen, die in dem Mehrweg-fähigen Netzwerkgerät (80, 160, 240) gespeichert sind.

2. Mehrweg-fähige Netzwerkvorrichtung nach Anspruch 1, wobei die Schutzsoftwarekomponente so konfiguriert ist, dass sie eine Firewall-Funktionalität in Bezug auf jeden einzelnen Pfad der Mehrwegübertragungsverbindung (65, 180, 181, 260) ausführt.

3. Mehrweg-fähige Netzwerkvorrichtung nach Anspruch 1, wobei die mindestens eine Schutzregel auf Informationen über eine Identifikation eines Mehrweg-Netzwerkprotokolls, das von der mindestens einen Mehrweg-fähigen Kundeneinrichtung (20, 110, 210) verwendet wird, und/oder den mindestens einen Zugangsnetzwerktyp und/oder die Quell-IP-Adresse der mindestens einen Mehrweg-fähigen Kundeneinrichtung (20, 110, 210) und/oder eine Ziel-IP-Adresse und/oder einen Quell-Port der mindestens einen Mehrweg-fähigen Kundeneinrichtung (20, 110, 210) und/oder eines Zielports und/oder einer dienstbasierten Information und/oder einer inhaltsbasierten Information, wobei die Mehrweg-fähige Netzwerkeinrichtung (80, 160, 240) so konfiguriert ist, dass sie in Reaktion auf die mindestens eine Schutzregel die Übertragung von Datenverkehr in Bezug auf jeden einzelnen Pfad der Mehrwegübertragungsverbindung (65, 180, 181, 260), die zwischen der Mehrweg-fähigen Netzwerkeinrichtung (80, 160, 240) und der mindestens einen Mehrweg-fähigen Kundeneinrichtung (20, 110, 210) eingerichtet ist, zulässt oder verweigert.

4. Mehrweg-fähige Netzwerkvorrichtung nach einem der vorhergehenden Ansprüche,
wobei die Mehrweg-fähige Netzwerkvorrichtung (80, 160, 240) so konfiguriert ist, dass es die Schutzsoftwarekomponente ausführt, um unter Verwendung einer Deep Packet Inspection den Inhalt jedes Datenpakets des Datenverkehrs zu prüfen, das zu einer einzelnen Sitzung gehört, und die Datenübertragung in Bezug auf jeden einzelnen Pfad der Mehrwegübertragungsverbindung (65, 180, 181, 260) zu blockieren oder zu unterbrechen, die zwischen der Mehrweg-fähigen Netzwerkvorrichtung (80, 160, 240) und der mindestens einen Mehrweg-fähigen Kundeneinrichtung (20, 110, 210) eingerichtet ist, wenn eines der überprüften Datenpakete Inhalte enthält, die zu einer in der Mehrweg-fähigen Netzwerkvorrichtung (80, 160, 240) gespeicherten schwarzen Liste gehören.

5. Mehrweg-fähige Netzvorrichtung nach einem der vorhergehenden Ansprüche, ferner aufweisend eine Schnittstelle zur externen Konfiguration der mindestens einen Schutzregel und/oder der vordefinierten Muster.

6. Kommunikationssystem (10, 100, 200) zur zentralen Überwachung und Steuerung des Datenverkehrs zwischen einer Mehrweg-fähigen Netzwerkvorrichtung (80, 160, 240) und mindestens einer Mehrweg-fähigen Kundeneinrichtung (20, 110, 210), wobei das Kommunikationssystem umfasst - mindestens ein Zugangsnetz (50, 60, 140, 141, 220) und ein Datennetz (90, 150, 250),
- eine Mehrweg-fähige Netzwerkvorrichtung (80, 160, 240) nach einem der Ansprüche 1 bis 6, wobei die Mehrweg-fähige Netzwerkvorrichtung (80, 160, 240) mit dem mindestens einen Zugangsnetz (50, 60, 140, 141, 220) und dem Datennetz (90, 150, 250) verbunden ist,
- mindestens eine Mehrweg-fähige Kundeneinrichtung (20, 110, 210), die dazu konfiguriert ist, eine Mehrwegübertragungsverbindung (65, 180, 181, 260) über das mindestens eine Zugangsnetz (50, 60, 140, 141, 220) zu der Mehrweg-fähigen Netzwerkvorrichtung (80, 160, 240) herzustellen, wobei die Mehrweg-fähige Netzwerkvorrichtung (80, 160, 240) so konfiguriert ist, dass sie eine in der Netzwerkvorrichtung (80, 160, 240) gespeicherte Schutzsoftwarekomponente ausführt, um den über jeden einzelnen Pfad der Multipfadübertragungsverbindung (65, 180, 181, 260) von und/oder zu der mindestens einen Mehrweg-fähigen Kundeneinrichtung (20, 110, 210) übertragenen Datenverkehr als Reaktion auf mindestens eine Schutzregel zu überwachen und zu steuern, um Malware oder einen Cyberangriff als Reaktion auf in der Mehrweg-fähigen Netzwerkvorrichtung (20, 110, 210) gespeicherte vordefinierte Muster zu erkennen.

7. Kommunikationssystem nach Anspruch 6, wobei
das mindestens eine Zugangsnetz (50, 60, 140, 141, 220) ein drahtloses Zugangsnetz oder ein leitungsgebundenes Zugangsnetz ist.

8. Kommunikationssystem (10) nach Anspruch 6 oder 7, wobei
die mindestens eine Kundeneinrichtung (20) mindestens ein Endbenutzergerät (30, 31) und eine damit verbundene Mehrweg-fähige Kopplungsvorrichtung (40) umfasst, wobei die Mehrwegfähige Kopplungsvorrichtung so konfiguriert ist, dass sie mit dem mindestens einen Zugangsnetz (50, 60) verbunden ist.

9. Kommunikationssystem nach Anspruch 6 oder 7,
wobei das mindestens eine Zugangsnetz (220) ein drahtloses Zugangsnetz ist und wobei die mindestens eine Kundeneinrichtung (210) ein Mehrweg-fähiges mobiles Endbenutzergerät umfasst, das so konfiguriert ist, dass es eine Mehrwegübertragungsverbindung (260) über das mindestens eine Zugangsnetz (220) zu der Mehrweg-fähigen Netzwerkvorrichtung (240) herstellt.

10. Kommunikationssystem nach einem der Ansprüche 6 bis 9,
wobei die Mehrweg-fähige Netzwerkvorrichtung (80, 160, 240) so konfiguriert ist, dass sie die mindestens eine Mehrweg-fähige Kundeneinrichtung (20, 110, 210) identifiziert und erkennt, ob die mindestens eine Mehrweg-fähige Kundeneinrichtung (20, 110, 210) mit der Mehrweg-fähigen Netzwerkvorrichtung (80, 160, 240) über eine Mehrwegübertragungsverbindung (65, 180, 181, 260) verbunden ist, die über das mindestens eine Zugangsnetz (50, 60, 140, 141, 220) hergestellt wird.

11. Kommunikationssystem nach einem der Ansprüche 6 bis 10, wobei
die mindestens eine Mehrweg-fähige Kundeneinrichtung (20, 110, 210) und die Mehrweg-fähige Netzwerkvorrichtung (80, 160, 240) jeweils zur Ausführung eines Mehrweg-Netzwerkprotokolls konfiguriert sind.

12. Kommunikationssystem nach Anspruch 11,
wobei das Mehrweg-Netzwerkprotokoll das MPTCP-Protokoll ist.

## Revendications

1. Dispositif de réseau à trajets multiples (80, 160, 240) pour surveiller et contrôler de manière centralisée un trafic de données vers et/ou depuis un équipement client à trajets multiples (20, 110, 210), où
le dispositif de réseau à trajets multiples (80, 160, 240) est configuré pour être connecté à un réseau de données (90, 150, 250) et, via une liaison de transmission de trajets multiples (65, 180, 181, 260) établie sur au moins un réseau d'accès (50, 60, 140, 141, 220), à au moins un équipement client à trajets multiples (20, 110, 210) afin de permettre à l'au moins un équipement client à trajets multiples (20, 110, 210) d'avoir un accès au réseau de données (90, 150, 250) et/ou à des services fournis par le réseau de données, et où
le dispositif de réseau à trajets multiples (80, 160, 240) est en outre configuré pour réaliser un composant logiciel de protection stocké dans le dispositif de réseau (80, 160, 240) pour surveiller et contrôler un trafic de données transmis à travers chaque chemin unique d'une liaison de transmission de trajets multiples (65, 180, 181, 260) établie depuis et/ou vers au moins un équipement client à trajets multiples (20, 110, 210), en réponse à au moins une règle de protection, pour détecter un logiciel malveillant ou une cyberattaque en réponse à des motifs prédéfinis stockés dans le dispositif de réseau à trajets multiples (20, 110, 210).

2. Dispositif à trajets multiples selon la revendication 1,
dans lequel le composant logiciel de protection est configuré pour réaliser une fonctionnalité de pare-feu par rapport à chaque chemin unique de la liaison de transmission de trajets multiples (65, 180, 181, 260).

3. Dispositif de réseau à trajets multiples selon la revendication 1,
dans lequel l'au moins une règle de protection est basée sur des informations concernant une identification d'un protocole de réseau de trajets multiples utilisé par l'au moins un équipement client à trajets multiples (20, 110, 210), et/ou l'au moins un type de réseau d'accès et/ou l'adresse IP source de l'au moins un équipement client à trajets multiples (20, 110, 210), et/ou une adresse IP de destination et/ou un port source de l'au moins un équipement client à trajets multiples (20, 110, 210), et/ou un port de destination et/ou des informations basées sur le service, et/ou des informations basées sur le contenu, le dispositif de réseau à trajets multiples (80, 160, 240) étant configuré pour autoriser ou refuser, en réponse à l'au moins une règle de protection, une transmission de trafic de données par rapport à chaque chemin unique de la liaison de transmission de trajets multiples (65, 180, 181, 260) établie entre le dispositif de réseau à trajets multiples (80, 160, 240) et l'au moins un équipement client à trajets multiples (20, 110, 210).

4. Dispositif de réseau à trajets multiples selon l'une quelconque des revendications précédentes,
le réseau à trajets multiples (80, 160, 240) étant configuré pour réaliser le composant logiciel de protection afin de vérifier, en utilisant une inspection approfondie des paquets, le contenu de chaque paquet de données du trafic de données qui appartient à une session unique et pour bloquer ou interrompre la transmission de données par rapport à chaque chemin unique de la liaison de transmission de trajets multiples (65, 180, 181, 260) établie entre le dispositif de réseau à trajets multiples (80, 160, 240) et l'au moins un équipement client à trajets multiples (20, 110, 210) si un des paquets de données vérifiés comporte un contenu appartenant à une liste noire stockée dans le dispositif de réseau à trajets multiples (80, 160, 240).

5. Dispositif de réseau à trajets multiples selon l'une quelconque des revendications précédentes, comprenant en outre une interface pour la configuration externe de l'au moins une règle de protection et/ou des motifs prédéfinis.

6. Système de communication (10, 100, 200) pour surveiller et contrôler de manière centralisée un trafic de données entre un dispositif de réseau à trajets multiples (80, 160, 240) et au moins un équipement client à trajets multiples (20, 110, 210), le système de communication comprenant :
- au moins un réseau d'accès (50, 60, 140, 141, 220) et un réseau de données (90, 150, 250),
- un dispositif de réseau à trajets multiples (80, 160, 240) selon l'une quelconque des revendications 1 à 6, le dispositif de réseau à trajets multiples (80, 160, 240) étant connecté à l'au moins un réseau d'accès (50, 60, 140, 141, 220) et au réseau de données (90, 150, 250),
- au moins un équipement client à trajets multiples (20, 110, 210) qui est configuré pour établir une liaison de transmission de trajets multiples (65, 180, 181, 260) sur l'au moins un réseau d'accès (50, 60, 140, 141, 220) au dispositif de réseau à trajets multiples (80, 160, 240), dans lequel
le dispositif de réseau à trajets multiples (80, 160, 240) est configuré pour réaliser un composant logiciel de protection stocké dans le dispositif de réseau (80, 160, 240) pour surveiller et contrôler un trafic de données transmis à travers chaque chemin unique de la liaison de transmission de trajets multiples (65, 180, 181, 260) depuis et/ou vers l'au moins un équipement client à trajets multiples (20, 110, 210), en réponse à au moins une règle de protection, pour détecter un logiciel malveillant ou une cyberattaque en réponse à des motifs prédéfinis stockés dans le dispositif de réseau à trajets multiples (20, 110, 210) .

7. Système de communication selon la revendication 6, dans lequel l'au moins un réseau d'accès (50, 60, 140, 141, 220) est un réseau d'accès sans fil ou un réseau d'accès fixe.

8. Système de communication (10) selon la revendication 6 ou 7, dans lequel l'au moins un équipement client (20) comprend au moins un dispositif d'utilisateur final (30, 31) et un dispositif de couplage à trajets multiples (40) connecté à celui-ci, le dispositif de couplage à trajets multiples étant configuré pour être connecté à l'au moins un réseau d'accès (50, 60).

9. Système de communication selon la revendication 6 ou 7,
dans lequel l'au moins un réseau d'accès (220) est un réseau d'accès sans fil, et dans lequel l'au moins un équipement client (210) comprend un dispositif d'utilisateur final mobile à trajets multiples configuré pour établir une liaison de transmission de trajets multiples (260) sur l'au moins un réseau d'accès (220) au dispositif de réseau à trajets multiples (240).

10. Système de communication selon l'une quelconque des revendications 6 à 9,
dans lequel le dispositif de réseau à trajets multiples (80, 160, 240) est configuré pour identifier l'au moins un équipement client à trajets multiples (20, 110, 210) et pour détecter si l'au moins un équipement client à trajets multiples (20, 110, 210) est connecté au dispositif de réseau à trajets multiples (80, 160, 240) via une liaison de transmission de trajets multiples (65, 180, 181, 260) établie sur l'au moins un réseau d'accès (50, 60, 140, 141, 220).

11. Système de communication selon l'une quelconque des revendications 6 à 10, dans lequel
l'au moins un équipement client à trajets multiples (20, 110, 210) et le dispositif de réseau à trajets multiples (80, 160, 240) sont configurés chacun pour exécuter un protocole de réseau de trajets multiples.

12. Système de communication selon la revendication 11, dans lequel le protocole de réseau de trajets multiples est le protocole MPTCP.
